# EUROPÄISCHE PATENTANMELDUNG

(11) **EP 2 738 430 A1**
(43) Veröffentlichungstag der Anmeldung: **04.06.2014**
(21) Anmeldenummer: 13189256.4
(22) Anmeldetag: 18.10.2013
(51) Int. Cl.: F16J 15/00, F16J 15/32, F16J 15/56

(54) **Dichtanordnung zur Abdichtung einer hin- und hergehenden Kolbenstange eines Kolbenkompressors**

(30) Priorität: 28.11.2012 AT 505482012
(71) Anmelder: Hoerbiger Kompressortechnik Holding GmbH, 1220 Wien (AT)
(72) Erfinder: Lagler, Martin, 1220 Wien (AT); Hold, Christian, 2102 Bisamberg (AT); Jandl, Alexander, 2465 Höflein (AT); Lindner-Silwester, Tino, 1230 Wien (AT); Loedl, Alexander, 1100 Wien (AT)
(74) Vertreter: Weiss, Christian

(57) **Zusammenfassung**

Um die Dichtmediumleckage in einer Dichtanordnung (1) bestehend aus zwei Dichtelementen (8), die durch ein Dichtmedium gegen die Kolbenstange (3) und gegen eine Wand (11) einer Ausnehmung (10) gedrückt werden, zu verringern, ist vorgesehen, dass sich die radial innen liegenden Umfangsfläche (24) zumindest eines der Dichtelemente (8) aus einer Dichtfläche (12) und einer Einzugsfläche (23) zusammensetzt, an die Dichtfläche (12) eine zweite, dem axialen Ende (11) der Ausnehmung (10) abgewandte Stirnfläche (21) anschließt und ein starrer Deckring (9) vorgesehen ist, der zumindest teilweise radial an der radial äußeren Umfangsfläche (25) des Dichtelements (8) und zumindest teilweise axial an der zweiten Stirnfläche (21) des Dichtelements (8) anliegt.

## Beschreibung

Die gegenständliche Erfindung betrifft eine Dichtanordnung zur Abdichtung einer hin- und hergehenden Kolbenstange eines Kolbenkompressors mit einem ersten und zweiten Dichtelement, die in einer Ausnehmung der Dichtanordnung axial beabstandet angeordnet sind, wobei die Dichtelemente mit einer ersten Stirnfläche an einem axialen Ende der Ausnehmung und mit einer Dichtfläche an der Kolbenstange anliegend angeordnet sind und in der Dichtanordnung eine Zuleitung für ein Dichtmedium vorgesehen ist, die mit der Ausnehmung verbunden ist.

In einem Kolbenkompressor ist der Raum mit hohem Druck, z.B. der Arbeitsdruck im Zylinder des Kompressors, gegenüber einem Raum mit niedrigem Druck, z.B. der Atmosphärendruck im Kurbelgehäuse des Kompressors, entlang der Kolbenstange abzudichten. Dazu werden in bekannter Weise sogenannte Dichtpackungen eingesetzt, die zwischen der hin-und herbewegten Kolbenstange des Kolbenkompressors und einem feststehenden Maschinenteil, in der Regel das Kompressorgehäuse, abdichten. Eine solche Dichtpackung umfasst in der Regel mehrere axial hintereinander angeordnete Packungsringe bzw. Packungsring-Kombinationen. Am häufigsten werden Kombinationen aus einem radial geschnittenen und einem tangential geschnittenen Packungsring verwendet, wie z.B. aus der EP 1 146 264 A2 hervorgehend. Daneben werden auch segmentierte Ringdesigns, bei denen ein Packungsring aus mehreren Ringsegmenten zusammengesetzt wird, eingesetzt, wie z.B. aus der US 4 350 349 A bekannt. Solche Abdichtungen sind jedoch keine zu 100% dichten Systeme, sondern weisen immer eine gewisse Leckagemenge des Arbeitsmediums des Kompressors auf, die durch die Abdichtung entweicht.

Um das Problem der Leckage zu reduzieren wurde in der WO 2010/079227 A1 bereits vorgeschlagen, als Abdichtung zwei axial beabstandete Dichtelemente zu verwenden, zwischen denen ein Dichtmedium, z.B. Öl, mit hohem Druck eingebracht wird, wodurch die Dichtelemente zur Abdichtung gegen vorgesehene Dichtflächen in der Dichtpackung und gegen die Kolbenstange gepresst werden. Auf diese Weise wird eine Dichtmediumbarriere geschaffen, die die Leckage des Arbeitsmedium des Kompressors, wie z.B. Luft oder Erdgas, entlang der Kolbenstange zumindest reduziert, im Idealfall und angestrebt sogar eliminiert. Allerdings kann es dabei zu einer Leckage von Dichtmedium zwischen Dichtelement und Kolbenstange kommen, hauptsächlich aufgrund des Dichtmediumfilms der an der Oberfläche der hin- und hergehenden Kolbenstange haftet und damit aus der Abdichtung transportiert und abgestreift wird. Da das Dichtelement aus einem tribologisch günstigen Werkstoff, in der Regel aus einem Kunststoff, gefertigt ist, kann es im Betrieb aufgrund der wirkenden Druckdifferenzen und der Geometrie des Dichtelements auch zu Verformungen des Dichtelements kommen, die die Dichtfläche bzw. die Dichtkante des Dichtelements negativ beeinflusst und damit die Dichtmediumleckage erhöht. Diese Dichtmediumleckage soll erwünschter Weise aber so gering wie möglich sein.

Es ist daher eine Aufgabe der gegenständlichen Erfindung eine Dichtanordnung der oben genannten Art anzugeben, mit der die Dichtmediumleckage durch die Abdichtung wirkungsvoll reduziert werden kann.

Das wird mit einem Dichtelement einer Abdichtung erreicht, bei der sich die radial innen liegenden Umfangsfläche zumindest eines der Dichtelemente aus der Dichtfläche und einer daran anschließenden Einzugsfläche zusammensetzt, wobei die Einzugsfläche gegenüber der Dichtfläche geneigt angeordnet ist und an die Dichtfläche eine zweite, dem axialen Ende der Ausnehmung abgewandte Stirnfläche des Dichtelementes anschließt und weiters ein starrer Deckring vorgesehen ist, der zumindest teilweise radial an der radial äußeren Umfangsfläche des Dichtelementes und zumindest teilweise axial an der zweiten Stirnfläche des Dichtelements anliegt. Dadurch, dass der Deckring axial und radial an der zweiten Stirnfläche des Dichtelements, die an die Dichtfläche des Dichtelements anschließt, anliegend angeordnet ist, greift der Deckring aktiv in die Verformung der Dichtkante bzw. des sich ausbildenden Dichtspaltes zwischen Dichtelement und Kolbenstange ein und stützt die Dichtkante. Durch die hin- und hergehende Bewegung der Kolbenstange wird Dichtmedium in den Dichtspalt gezogen, wodurch sich im Dichtspalt Druck aufbaut, der das Dichtelement radial aufweiten will. Durch den Deckring kann einerseits der Dichtspalt durch die hin- und hergehende Bewegung der Kolbenstange und den darauf anhaftenden Dichtmediumfilm nicht zu weit aufmachen, was zu einer erhöhten Dichtmediumleckage durch die Abdichtung führen würde. Andererseits stützt der Deckring das Dichtelement auch gegen auftretende Stülpmomente, die versuchen, das Dichtelement zu verformen, was sich ebenfalls negativ auf die Dichtkante bzw. den Dichtspalt auswirken würde und gleichfalls die Dichtmediumleckage durch die Abdichtung erhöhen würde.

Ein L-förmiger Deckring ist einfach und kann vorteilhaft kompakt ausgeführt werden.

Für anzustrebende niedrige Reibkräfte bzw. Reibleistungen und geringe Dichtmediumleckagen hat es sich als besonders vorteilhaft herausgestellt, wenn der Deckring an einem Teil der radialen Höhe des Dichtelements, vorzugsweise an zumindest 35% bis maximal 85% der radialen Höhe, axial am Dichtelement anliegt, oder sich die Dichtfläche über maximal 50% der axialen Breite des Dichtelements erstreckt, oder die Einzugsfläche gegenüber der Dichtfläche um maximal 4° geneigt ist, oder die zweite Stirnfläche des Dichtelements gegenüber der Dichtfläche um mindestens 75° geneigt ist, oder der Deckring an zumindest 25% bis maximal 100% der axialen Breite der radial äußeren Umfangsfläche des Dichtelements an dieser anliegt. Ganz besonders vorteilhaft ist dabei eine Dichtelement-Deckring Kombination, die alle, oder zumindest mehrere der oben genannten Merkmale erfüllt.

Um durch Extrusions des Dichtelements in den Spalt zwischen Kammerscheibe und Kolbenstange hervorgerufene Verformungen des Dichtelements zu vermeiden, ist zwischen dem axialen Ende der Ausnehmung und dem Dichtelement vorteilhaft ein Stützring angeordnet, an dem das Dichtelement axial anliegend angeordnet ist.

Ganz besonders bevorzugt, liegt der Stützring radial außen an einer dem Dichtelement zugewandten axialen Schulter an. Auf diese Weise kann verhindert werden, dass der Stützring die Kolbenstange berührt.

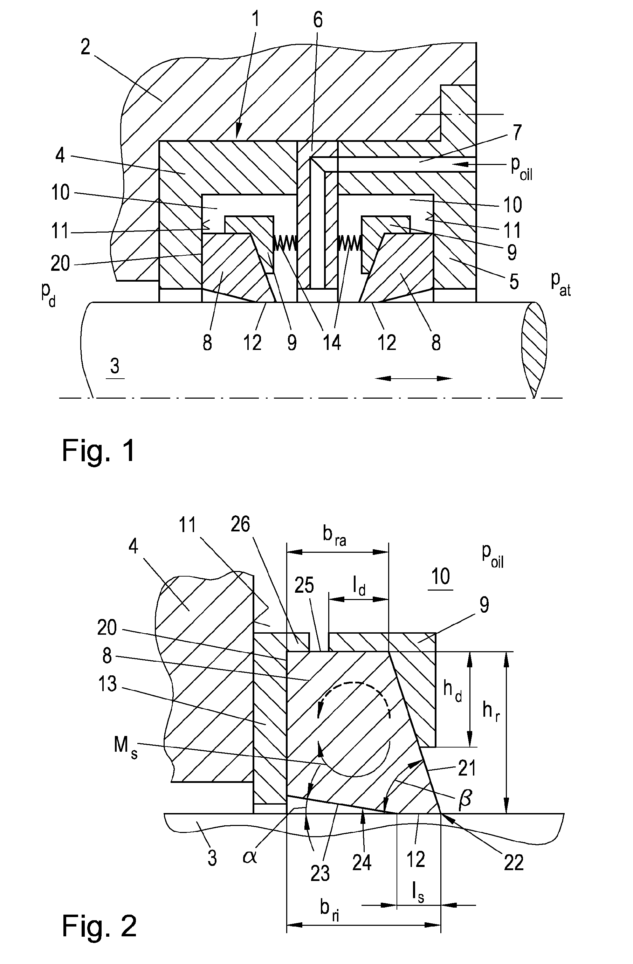

Die gegenständliche Erfindung wird nachfolgend unter Bezugnahme auf schematischen, nicht einschränkenden und vorteilhafte Ausgestaltungen der Erfindung zeigenden Figuren 1 und 2 näher erläutert. Dabei zeigt
Fig.1 eine erfindungsgemäße Dichtanordnung und
Fig.2 eine Detailansicht eines Dichtelements einer erfindungsgemäßen Dichtanordnung.

In Fig. 1 ist eine erfindungsgemäße Dichtanordnung 1 zur Abdichtung einer axial hin- und hergehenden Kolbenstange 3 eines Kolbenkompressors gegenüber einer abzudichtenden Druckdifferenz p_{d} - pₐₜ eines Arbeitsmediums, z.B. die Differenz von Zylinderdruck p_{d} und Druck im Kurbelkaste pₐₜ, dargestellt. Die Dichtanordnung 1 ist in einem feststehenden Gehäuseteil 2 des Kompressors angeordnet und dichtet zwischen diesem Gehäuseteil 2 und der bewegten Kolbenstange 3.

Die Dichtanordnung 1 umfasst im gezeigten Beispiel zwei L-förmige Kammerscheiben 4, 5, die im dargestellten Ausführungsbeispiel axial durch eine Trennscheibe 6 getrennt sind. Die L-förmigen Kammerscheiben 4, 5 und die Trennscheibe 6 sind axial aneinander anliegend angeordnet und radial von der Kolbenstange 3 beabstandet, um ein Anstreifen der Kolbenstange 3 an den Kammerscheiben 4, 5 bzw. der Trennscheibe 6 zu verhindern und um eine Beweglichkeit der Kolbenstange 3 quer zur Hubbewegung (angedeutet durch den Doppelpfeil) zu ermöglichen. Im einfachsten Fall kann die Trennscheibe 6 aber auch weggelassen werden. Es sind aber auch andere Ausführungen, z.B. mit T-förmigen Trennscheiben, denkbar. An einer Kammerscheibe 5 kann radial außen auch ein Flansch vorgesehen sein, mittels dem die Dichtanordnung 1 am Gehäuseteil 2 befestigt werden kann. Die Kammerscheiben 4, 5 und gegebenenfalls die Trennscheibe 6 können in bekannter Weise durch einen durchgehenden Bolzen zusammengehalten werden. Durch diese Anordnung entsteht zwischen den L-förmigen Kammerscheiben 4, 5, gegebenenfalls der Trennscheibe 6 und der Kolbenstange 3 zwei Ausnehmungen 10, in der jeweils ein Dichtelement 8 angeordnet ist. Grundsätzlich könnte aber auch nur ein Dichtelement 8, in einer der Ausnehmungen 10 vorgesehen sein oder die Dichtelemente 8 könnten auch unterschiedlich ausgeführt sein. Das Dichtelement 8 ist als einteiliger, in Umfangsrichtung ungeschnittener Dichtring ausgeführt und wird durch den wirkenden Druck eines in die Ausnehmung 10 zugeführten, unter Druck stehenden Dichtmediums jeweils an den axialen Enden 11 der Ausnehmung 10, also an den radialen Schenkeln der L-förmigen Kammerscheiben 4, 5, angedrückt (die Orientierungen "axial" und "radial" sind auf die Orientierung der Kolbenstange 3 bezogen). Die Dichtelemente 8 sind radial außen beabstandet von den Kammerscheiben 4, 5, also von den axialen Schenkeln der Kammerscheiben 4, 5, angeordnet und liegen radial innen mit einer sich in axialer Richtung erstreckenden Dichtfläche 12 an der Kolbenstange 3 an. An den Dichtelementen 8 liegt radial und axial ein starrer, ungeteilter, z.B. metallischer, Deckring 9 an, wie weiter unten unter Bezugnahme auf die Fig.2 im Detail ausgeführt wird.

Zwischen Deckring 9 und einen axialen Anschlag in der Abdichtung 1, hier z.B. die Trennscheibe 6, kann auch ein Federelement 14, z.B. mehrere über den Umfang verteilte Spiralfedern, angeordnet sein, das den Deckring 9 und damit das Dichtelement 8 axial in Richtung des axialen Endes 11 der Ausnehmung 10 vorspannt. Die beiden Dichtelemente 8 werden durch das Federelement 14 folglich auseinandergedrückt. Damit kann vor allem im Stillstand eine definierte Lage des Dichtelements 8 sichergestellt werden, womit die Abdichtung 1 bzw. der Kompressor sicher gestartet werden kann.

In der Dichtanordnung 1 ist weiters eine Zuleitung 7 vorgesehen, die mit der Ausnehmung 10 verbunden ist und über die ein Dichtmedium, wie z.B. ein Öl, unter einem Druck pₒᵢₗ, der größer ist als der abzudichtende Druck p_{d}, bzw. in bestimmten Ausführungen zumindest größer als der Saugdruck des Kompressors, in die Ausnehmung 10 zugeführt werden kann. Im Falle eines sich dynamisch ändernden Arbeitsdruckes p_{d} muss natürlich gelten pₒᵢₗ > p_{d,max}, oder der Druck des Dichtmediums wird dynamisch an den Druck des Arbeitsmediums angepasst, sodass immer gilt pₒᵢₗ > p_{d}. Das Dichtmedium wirkt radial außen und axial auf die Dichtelemente 8 bzw. die Deckringe 9, die somit radial nach innen an die Kolbenstange 3 und axial an die Kammerscheiben 4, 5 gedrückt werden und somit abdichten. Dadurch entsteht eine Dichtmediumbarriere, die eine Leckage des abzudichtenden gasförmigen Arbeitsmediums des Kompressors entlang der Kolbenstange 3 verhindert.

In Fig.2 ist ein Dichtelement 8 in vorteilhafter Ausgestaltung vergrößert dargestellt. Zusätzlich ist in Fig.2 zwischen Dichtelement 8 und dem axialen Ende 11 der Ausnehmung 10 ein optionaler Stützring 13 angeordnet, an dem das Dichtelement 8 axial mit einer ersten Stirnfläche 20 anliegt. Der Stützring 13 liegt axial an der Kammerscheibe 4 an. Wie oben zu Fig.1 bereits beschrieben, kann der Stützring 13 auch entfallen, womit das Dichtelement 8 mit der ersten Stirnfläche 20 axial direkt am axialen Ende 11 der Ausnehmung 10, also hier an der Kammerscheibe 4, anliegen würde.

Das Dichtelement 8 hat eine radial innere Umfangsfläche 24, die aus einer Dichtfläche 12 und einer daran anschließenden Einzugsfläche 23 zusammengesetzt ist. Die Dichtfläche 12 ist am der ersten Stirnfläche 20 abgewandten axialen Ende des Dichtelements 8 vorgesehen. Die Einzugsfläche 23 ist dabei um einen Winkel α gegenüber der Dichtfläche 12 geneigt und verbindet bevorzugt die Dichtfläche 12 mit der ersten Stirnfläche 20. Die der ersten Stirnfläche 20 gegenüberliegende zweite axiale Stirnfläche 21 des Dichtelements 8 ist um einen Winkel β gegenüber der Dichtfläche 12 geneigt angeordnet und schließt bevorzugt an die Dichtfläche 12 an. Die Kante zwischen Dichtfläche 12 und der zweiten Stirnfläche 21 bildet die Dichtkante 22 aus.

Das Dichtelement 8 liegt damit nur an der kleinen Dichtfläche 12 an der Kolbenstange 3 an, gegen die es mit hohem Druck (pₒᵢₗ) gedrückt wird. Es entstehen dadurch hohe Reibbelastungen, denen das Dichtelement 8 ausreichend lange widerstehen muss. Das Dichtelement 8 wird daher bevorzugt aus einem tribologisch günstigen, aber gleichzeitig mechanisch hochfesten und temperaturstabilem Material, vorzugsweise Kunststoff, wie z.B. modifizierte PEEK oder PPS Werkstoffe, gefertigt. Auf das Dichtelement 8 bzw. den Deckring 9 wirken dabei durch den Druck pₒᵢₗ des Dichtmediums Kräfte, die das Dichtelement 8 gegen die Kammerscheibe 4 bzw. den Stützring 13 und mit der Dichtfläche 12 gegen die Kolbenstange 3 presst. Dadurch können bei einem Dichtmediumdruck pₒᵢₗ von ca. 50bar zwischen Dichtelement 8 und Kolbenstange 3 Reibkräfte in der Höhe von einigen hundert Newton, typischerweise zwischen 100N und 250N, und Reibleistungen in der Höhe von einigen hundert Watt, typischerweise zwischen 500W und 1000W, entstehen. Aufgrund dieser Kräfte und der Geometrie des Dichtelements 8 wirken auf das Dichtelement 8 aber auch Stülpmomente M_{S}, die versuchen, das Dichtelement 8 zu verformen. Insbesondere die sehr kleine Dichtfläche 12 bzw. die Dichtkante 22 ist darauf sehr empfindlich und solche Stülpmomente M_{S} können den Kontakt zwischen Kolbenstange 3 und der Dichtfläche 12 stören, womit die Dichtmediumleckage steigen würde. Um das zu reduzieren bzw. zu verhindern, ist der Deckring 9 vorgesehen, der an der vorderen zweiten Stirnfläche 21 des Dichtelementes 8, die an die Dichtfläche 12 anschließt, axial anliegt und die Dichtkante 22 damit gegen Verformung stützt, sodass sich diese nicht oder nur unwesentlich verformen kann. Dazu liegt der Deckring 9 teilweise über die Höhe h_{d} am Dichtelement 8 an, wobei die Höhe h_{d} vorteilhaft zumindest 35% bis 85% der Höhe hᵣ des Dichtelements 8 beträgt.

Gleichfalls hat sich gezeigt, dass sich das Dichtelement 8 im Betrieb radial aufweiten kann, insbesondere bei mehrmaligem Start/Stopp Betrieb des Kompressors, bei Start/Stopp des Dichtmediumversorgungssystems oder beim Anfahrbetrieb, wenn sich das Dichtelement erst einlaufen muss, was natürlich ebenfalls die Dichtmediumleackage erhöhen würde. Um das zu unterbinden, überdeckt der Deckring 9 das Dichtelement 8 in axialer Richtung auch an der radial äußeren Umfangsfläche 25. Dazu liegt der Deckring 9 entlang einer Länge l_{d} an der äußeren Umfangsfläche 25 an, wobei die Länge l_{d} vorteilhaft zumindest 25% bis 100% der Breite bᵣₐ des Dichtelements 8 an der äußeren Umfangsfläche 25 beträgt. Damit ergibt sich ein L-förmiger Querschnitt des Deckringes 9.

Für einen günstigen Betrieb des Dichtelements 8, also für niedrige Reibkräfte bzw. Reibleistungen und eine geringe Dichtmediumleckage, hat es sich weiters als vorteilhaft erwiesen, wenn der Winkel α<4°, aber größer Null, und der Winkel β>75°, wobei auch Winkel größer 90° denkbar sind, gewählt wird. Gleichfalls ist es dafür vorteilhaft, wenn die Länge lₛ der Dichtfläche 12 maximal 50% der Breite bᵣᵢ des Dichtelements 8 an der inneren Umfangsfläche 24 beträgt.

Der Stützring 13 kann radial außen eine axiale, dem Dichtelement 8 zugewandte Schulter 26 aufweisen, über die der Stützring 13 radial am Dichtelement 8 anliegt, um zu verhindern, dass der Stützring 13, der typischerweise aus einem Metall gefertigt ist, in Kontakt mit der Kolbenstange 3 geraten kann. In diesem Fall liegt der Deckring 9 bevorzugt entlang einer Länge l_{d} von zumindest 25% bis 75% der Breite bᵣₐ des Dichtelements 8 an der äußeren Umfangsfläche 25 an, um Platz für die Schulter 26 zu schaffen. Der Stützring 13 unterbindet bekannter Weise, dass das Dichtelement 8 aufgrund der wirkenden Druckdifferenz in den Spalt zwischen Kammerscheibe 4 und Kolbenstange 3 extrudiert wird, was die Funktion des Dichtelements 8 negativ beeinflussen könnte.

## Patentansprüche

1. Dichtanordnung zur Abdichtung einer hin- und hergehenden Kolbenstange (3) eines Kolbenkompressors mit einem ersten und zweiten Dichtelement (8), die in einer Ausnehmung (10) der Dichtanordnung (1) axial beabstandet angeordnet sind, wobei die Dichtelemente (8) mit einer ersten Stirnfläche (20) an einem axialen Ende (11) der Ausnehmung (10) und mit einer Dichtfläche (12) an der Kolbenstange (3) anliegend angeordnet sind und in der Dichtanordnung (1) eine Zuleitung (7) für ein Dichtmedium vorgesehen ist, die mit der Ausnehmung (10) verbunden ist, **dadurch gekennzeichnet, dass** sich die radial innen liegenden Umfangsfläche (24) zumindest eines der Dichtelemente (8) aus der Dichtfläche (12) und einer daran anschließenden Einzugsfläche (23) zusammensetzt, wobei die Einzugsfläche (23) gegenüber der Dichtfläche (12) geneigt angeordnet ist, **dass** an die Dichtfläche (12) eine zweite, dem axialen Ende (11) der Ausnehmung (10) abgewandte Stirnfläche (21) anschließt **und dass** ein starrer Deckring (9) vorgesehen ist, der zumindest teilweise radial an der radial äußeren Umfangsfläche (25) des Dichtelementes (8) und zumindest teilweise axial an der zweiten Stirnfläche (21) des Dichtelements (8) anliegt.

2. Dichtanordnung nach Anspruch 1, **dadurch gekennzeichnet, dass** der Deckring (9) L-förmig ausgeführt ist.

3. Dichtanordnung nach Anspruch 1, **dadurch gekennzeichnet, dass** der Deckring (9) an einem Teil (h_{d}) der radialen Höhe (hᵣ) des Dichtelements (8), vorzugsweise an zumindest 35% bis maximal 85% der radialen Höhe (hᵣ), axial am Dichtelement (8) anliegt.

4. Dichtanordnung nach Anspruch 1, **dadurch gekennzeichnet, dass** sich die Dichtfläche (12) über eine Länge (lₛ) von maximal 50% der axialen Breite (bᵣᵢ) der radial inneren Umfangsfläche (24) des Dichtelements (8) erstreckt.

5. Dichtanordnung nach Anspruch 1, **dadurch gekennzeichnet, dass** die Einzugsfläche (23) gegenüber der Dichtfläche (12) um maximal 4° geneigt ist.

6. Dichtanordnung nach Anspruch 1, **dadurch gekennzeichnet, dass** die zweite Stirnfläche (21) des Dichtelements (8) gegenüber der Dichtfläche (12) um mindestens 75° geneigt ist.

7. Dichtanordnung nach Anspruch 1, **dadurch gekennzeichnet, dass** der Deckring (9) an zumindest 25% bis maximal 100% der axialen Breite (bᵣₐ) der radial äußeren Umfangsfläche (25) des Dichtelements (8) an dieser anliegt.

8. Dichtanordnung nach einem der Ansprüche 1 bis 6, **dadurch gekennzeichnet, dass** zwischen dem axialen Ende (11) der Ausnehmung (10) und dem Dichtelement (8) ein Stützring (13) angeordnet ist, an dem das Dichtelement (8) axial anliegend angeordnet ist.

9. Dichtanordnung nach Anspruch 8, **dadurch gekennzeichnet, dass** der Stützring (13) radial außen eine dem Dichtelement (8) zugewandte axiale Schulter (26) aufweist, die radial außen am Dichtelement (8) anliegend angeordnet ist.
